# DEMANDE DE BREVET EUROPEEN

(11) **EP 2 821 859 A1**
(43) Date de publication de la demande: **07.01.2015**
(21) Numéro de dépôt: 14290179.2
(22) Date de dépôt: 19.06.2014
(51) Int. Cl.: G03G 21/04, H04N 1/00, B41M 3/14

(54) **Document infalsifiable**

(30) Priorité: 19.06.2013 FR 1301419
(71) Demandeur: CEAG Comptoir Européen des Arts Graphiques SARL, 61100 Cerisy Belle Etoile (FR)
(72) Inventeur: Lorgis, Jean Philippe, 61100 Cerisy Belle Etoile (FR)

(57) **Abrégé**

Dispositif contre la falsification de documents imprimés par changement d'intitulé entre l'original et sa copie obtenue lors d'une duplication par photocopie ou scan informatique.

L'invention concerne un dispositif pour éviter les falsifications de documents, formant un document imprimé, constituant un original composé d'un intitulé d'origine qui disparait au profit d'un autre intitulé obtenu par photocopie, ou scan informatique, caractérisé en ce que le document est constitué d'une composition de diverses trames, linéatures et de deux couleurs ou contrastes ou plus , pour que leur mixage génère deux intitulés graphiques sur un même document, le premier constituant l'intitulé de l'original vu par l'oeil humain par différence de couleurs (5,6) et le second intitulé constituant l'intitulé de la copie (7,8) seul détecté par les photocopieurs ou les scanners par différence de trames et de linéatures.

Le dispositif est particulièrement destiné à rendre tous documents imprimés uniques et infalsifiables.

## Description

La présente invention vise un dispositif applicable à tous documents imprimés pour éviter leur falsification en permettant une distinction entre le document original et sa copie réalisée par photocopie ou scan informatique, en changeant son intitulé d'origine en un intitulé différent lors de la duplication par photocopieur ou scanner.

Tout document peut en effet être dupliqué aisément à l'heure actuelle. De surcroit, la modification des documents scannés est maintenant aisée avec des logiciels de retouche devenus communs. Ainsi , il est devenu facile de dupliquer une signature ou de changer une date et quiconque peut obtenir un faux document en nuisant aux émetteurs des originaux de ces documents. Les transmissions de documents souffrent donc dans un grand nombre de cas que les originaux et les duplicatas ne se distinguent pas véritablement.

Il existe naturellement des encres particulières qui permettent avec des outils spéciaux de détecter des faux (comme pour les éléments anti-falsifications des billets). Ces systèmes permettent de vérifier qu'il s'agit d'un original ou d'une copie. Mais leur mise en oeuvre est coûteuse. Il existe des méthodes qui font apparaitre une mention particulière lors de leur duplication. Par contre, aucun dispositif actuel ne permet de changer un intitulé en un autre intitulé pour distinguer qu'il s'agit d'un original ou de son duplicata.

Le dispositif selon l'invention permet à tout utilisateur de se protéger facilement contre les falsifications d'originaux, les fausses duplications ou l'usage frauduleux d'originaux. L'invention permet également de consommer moins de papier en n'éditant qu'un seul original papier au lieu d'un original et de ses doubles comme souvent. En effet, en utilisant le type de document objet de l'invention, imprimé selon les méthodes usuelles d'impression (imprimerie classique ou impression numérique), l'utilisateur a la possibilité d'éditer un document portant un intitulé d'origine qui peut être en fond de page ou en titre avec la certitude que toute photocopie ou scan de ce document changera cet intitulé d'origine en un autre intitulé différent.

Selon les caractéristiques techniques constructives, le dispositif réside dans la conception particulière du document, en prenant en considération que l'oeil humain ne voit pas les différences entre les diverses linéatures d'imprimerie, et que le photocopieur ou scan ne reproduit pas ou très mal les linéatures fines (par exemples le 150 lignes par pouce), avec l'emploi de certaines couleurs adaptées.

Selon l'invention il convient de réaliser un document dont le graphisme visuel initial disparait au profit d'un graphisme différent restitué par un photocopieur ou un scanner.

Selon l'invention, ce dispositif est caractérisé en ce qu'il est obtenu par le mixage des trames d'imprimeries, des linéatures d'imprimeries avec le mixage de deux couleurs ou contrastes de couleurs appropriées ou plus.

Selon l'invention, il s'agit ainsi d'un dispositif pour éviter les falsifications de documents en garantissant la véracité du document original et de sa copie, présenté sous la forme d'un document imprimé selon les méthodes usuelles d'impression, constituant un original composé d'un intitulé d'origine (lettre, mot, signe et ou logo...)qui peut être en fond de page ou en titre sur une partie ou sur la totalité du document, intitulé d'origine qui disparait pour donner place à un nouvel intitulé sur le document duplicata (autre lettre, autre mot, autre signe et ou autre logo...) obtenu lors de la photocopie, ou du scan informatique, caractérisé en ce que ce document original est constitué d'une composition particulière de diverses trames, linéatures et de deux couleurs ou contrastes appropriés ou plus, dont le mixage, selon les caractéristiques de l'invention, génère deux intitulés graphiques réunis sur un même document en superposition ou non, l'un vu par l'oeil humain par différence de couleurs ou contrastes, et l'autre intitulé imperceptible ou très mal perceptible par l'oeil humain et seul détecté par les photocopieurs et scanners par différence de trames et de linéatures. Pour l'oeil humain tout se passe comme si l'intitulé d'origine disparaissait au profit d'un autre intitulé lors de la création du duplicata en photocopieuse ou scanner, l'intitulé initial étant unique et très difficilement copiable, l'intitulé apparaissant en copie étant également unique et très difficilement copiable.

L'invention, pour éviter les falsifications de documents imprimés en permettant une distinction entre le document original et sa copie réalisée par photocopie ou scan informatique, va maintenant être décrite avec plus de détails en se référant à un mode de réalisations particulières donné à titre d'exemple seulement et illustré par les dessins annexés, dans lesquels :
Figure 1 est une représentation schématique du dispositif du document initial portant un intitulé vu par l'oeil (image visible par différence de couleur)
Figure 2 est une représentation schématique du dispositif selon l'invention correspondant à la copie du document initial de la figure 1 réalisée par photocopieur et portant un autre intitulé vue par l'oeil (image produite par différence de linéatures et de trames par le photocopieur)
Figure 3 est une représentation zoomée schématique à l'échelle micrométrique du dispositif de l'invention d'une zone de l'intitulé de la Figure 1 montrant la différence de linéatures et de trames et de couleurs présente dans une lettre de l'intitulé initial.
Figure 4 est une représentation zoomée schématique à l'échelle micrométrique du dispositif de l'invention de la même zone de l'intitulé de la figure 3 montrant la différence de linéature et de trame et de couleurs de la copie produite par un photocopieur ou un scanner et formant un autre intitulé vu par l'oeil après duplication par photocopieur ou scan

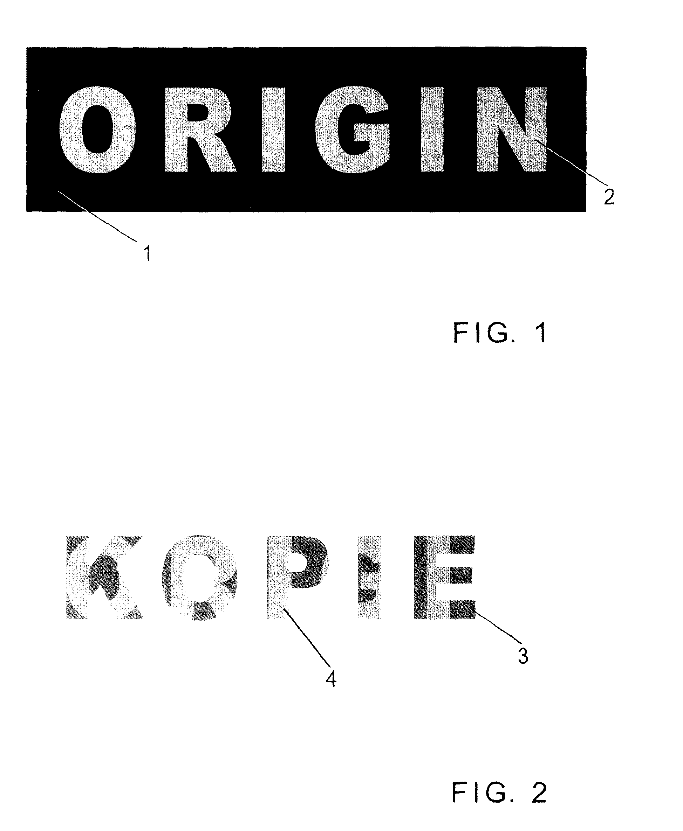

Pour ce cas particulier de réalisation, La figure 1 représente le document initial caractérisé par un aspect bicolore et la détermination de l'intitulé « ORIGIN » par contraste de ces deux couleurs, le fond étant en tramé bleu 10% (1), et l'intitulé étant en tramé rouge 10% (2).

La Figure 2 représente la copie obtenue par photocopie ou scan informatique du document initial de la figure 1, l'intitulé initial « ORIGIN » ayant disparu pour donner place à un autre intitulé « KOPIE » composé d'une partie de tramé bleu à 10% (3) et de tramé rouge à 10%(4) du document initial.

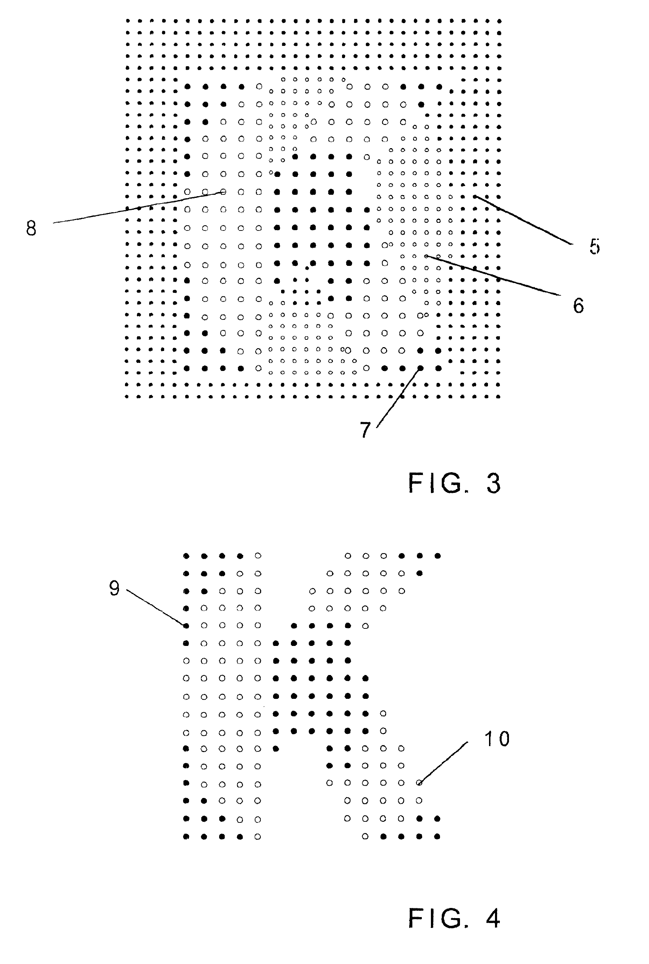

La figure 3 montre à une échelle beaucoup plus petite schématiquement ramenée pour l'explication à l'ordre du micromètre, que la composition du document imprimé objet de l'invention décrit deux intitulés partiellement superposés formant les mots « ORIGIN » et « KOPIE », le O de la figure 1 étant en partie superposé par le K de la figure 2, cette zone étant constituée de multiples trames à 150 lignes par pouce (une trame à 10% bleue (5), une trame à 10% rouge (6) et de multiples trames en linéature 85 lignes par pouce, une trame à 10% bleue (7), une trame rouge à 10 % (8).

La figure 4 représente la copie par photocopieur ou scan informatique obtenue de la figure 3, les choix de pantone couleurs permettant de conserver sur cette copie seulement les trames à linéature de 85 lignes par pouce en bleu (9) et en rouge (10)

Le mixage de ces différentes trames, linéatures et couleurs est effectué pour que le mot « ORIGIN » soit visible à l'oeil par différence de couleurs Bleue (1,3,5,7,9) et Rouge(2,4,6,8,10) indépendamment des linéatures, le mot « KOPIE » étant imperceptible ou très mal perceptible à l'oeil sur le document initial mais parfaitement lisible par les seuls photocopieur ou scanner sous la seule linéature 85(3,4,7,8,9,10).

Selon le dispositif, la teneur du bleu a un pantone recherché pour être vu par l'oeil avec une trame de 10% quelle que soit la linéature 150 ou 85 lignes par pouce (1,3,5,7,9); mais non détecté ou lu par le photocopieur en linéature de 150 lignes par pouces (5) et détecté par cette même machine avec une linéature à 85 lignes par pouce (7,9), cas de l'exemple pantone bleu 299 U.

Selon le dispositif, la teneur du rouge a un pantone recherché pour être vu par l'oeil avec une trame à 10% quelle que soit la linéature 150 ou 85 (2,4,6,8,10) mais non lu par le photocopieur en linéature à 150 (6) et lu par le même photocopieur ou scanner en linéature à 85 (8,10) cas de l'exemple pantone rouge 206 U.

Selon ce dispositif, le document initial d'origine apparait avec un intitulé visible à l'oeil avec le mot « ORIGIN » selon les différences de couleurs, le mot « ORIGIN » en tramé rouge (2,4,6,8,10), sur fond tramé bleu (1,3,5,7,9.), alors que sur la copie de ce document initial d'origine apparait un autre intitulé visible à l'oeil « KOPIE », seul mot lisible par les photocopieurs ou les scanners composé d'une mosaïque de couleurs de tramé rouge et bleu en linéature 85 lignes par pouce(7,8,9,10), et déterminé par la différence de trames et linéatures.

Bien entendu l'invention n'est pas limitée au mode de réalisation qui vient d'être décrit et représenté. On pourra y apporter de nombreuses modifications de détail sans sortir pour cela du cadre de l'invention.

Ce dispositif particulier peut être intégré à tout document imprimé. Selon le dispositif de l'invention d'autres possibilités de couleurs pantone ou de contrastes de couleurs associées à d'autres pourcentages de trames et à d'autres éléments de linéatures sont possibles.

L'invention trouve une application particulièrement intéressante pour la fabrication de documents imprimés selon les méthodes usuelles d'imprimerie ou de sortie d'ordinateur, à destination des professionnels ou des particuliers soucieux d'éditer des documents originaux et des copies garantis. L'application est également adaptée au monde de l'éditique.

## Revendications

1. / Document dont on évite les falsifications, le document étant imprimé en ayant une composition de diverses trames (6,8) et linéatures (5,7) et de couleurs ou contrastes de couleurs (9,10), dont le mixage (5,6,7,8,9,10) génère deux intitulés graphiques sur le même document en superposition ou non, le premier intitulé (2,6,8) vu par l'oeil humain par différence de couleurs ou contrastes de couleurs (1,2) ; et le second intitulé (3,4,7,8,9,10) imperceptible ou très mal perceptible par l'oeil humain sur le document, est seul détecté par les photocopieurs ou les scanners par différence de trames et de linéatures, **caractérisé en ce que** seul le second intitulé imperceptible ou très mal perceptible à la vue de l'oeil humain sur le document est détecté par les photocopieurs ou les scanners et apparaît visuellement sur la copie établie par un photocopieur ou un scan informatique (3,4,9,10).

2. / Document selon la revendication 1, **caractérisé en ce que** le document est composé d'un premier intitulé d'origine visible à la vue de l'oeil (lettre, mot, signe et ou logo... (2,6,8)) qui peut être en fond de page ou en titre sur une partie ou sur la totalité du document, ce premier intitulé visuel du document disparaissant pour donner place à un second intitulé visible à la vue de l'oeil sur le document duplicata (autre lettre, autre mot, autre signe et ou autre logo...(3,4,7,8,9,10)) obtenu lors de la photocopie, ou du scan informatique.

3. / Document selon l'une quelconque des revendications précédentes, **caractérisé en ce que** le premier intitulé apparait visuellement et caractérise le document selon la différence de couleurs ou leur contraste vue par l'oeil humain (1,2).

4. / Document selon l'une quelconque des revendications précédentes, **caractérisé en ce que** le document comporte deux intitulés (6,7,8), imprimés selon les méthodes usuelles d'impression (imprimerie classique ou numérique) alors que sa copie obtenue par photocopie ou scan informatique ne comporte plus que l'intitulé résultant de leur détection (7,8).

5. / Document selon l'une quelconque des revendications précédentes, **caractérisé en ce que** l'intitulé du document est très difficilement copiable dans son empreinte micrométrique (5,6,7,8), et que l'intitulé apparaissant sur la copie obtenue lors de la duplication par photocopieur ou scan informatique est également très difficilement copiable (9,10) dans son empreinte micrométrique, ce qui rend le document imprimé unique et sa copie par photocopieur ou scan également unique.
